# EUROPEAN PATENT APPLICATION

(11) **EP 3 023 630 A1**
(43) Date of publication of application: **25.05.2016**
(21) Application number: 15194654.8
(22) Date of filing: 16.11.2015
(51) Int. Cl.: F02N 15/00, F02N 15/06, F16H 3/44, F16H 55/08, F16H 57/08, H02K 7/10, H02K 7/116, H02K 7/118, F16D 1/06, F16H 57/00, F16D 1/112, F16H 1/48, F16H 57/022

(54) **ELECTRIC MOTOR ASSEMBLY AND VEHICLE STARTER**

(30) Priority: 19.11.2014 CN 201410662600
(71) Applicant: ROBERT BOSCH GMBH, 70442 Stuttgart (DE)
(72) Inventor: Jiang, Jiajia, 410100 Changsha, Hunan (CN)

(57) **Abstract**

An electric motor assembly, in particular an electric motor assembly of a vehicle starter, is disclosed, which comprises an electric motor and a speed changing mechanism, the electric motor comprising an armature shaft, and the speed changing mechanism comprising an input gear which is fitted onto the armature shaft by splines. The splines comprise male spline keys formed on the armature shaft and female spline keys formed in the input gear for mating with the male spline keys, each spline key including a pair of key flanks, at least one of which is oblique with respect to a central axis of the armature shaft. A vehicle starter comprising the above electric motor assembly is also disclosed. Wear of a commentator and electric brushes of the motor caused by axial displacement of the armature can be avoided.

## Description

### Technical Field

The disclosure relates to an electric motor assembly, which is particularly to be used in a vehicle starter. The disclosure also relates to a vehicle starter which comprises such an electric motor assembly.

### Background Art

A starter of an automotive vehicle generally comprises a DC electric motor, a transmission mechanism for transmitting the output movement of the electric motor to an engine, and a solenoid switch for controlling the actions of the electric motor and the transmission mechanism.

A gear type speed reducing mechanism is generally disposed between the electric motor and the transmission mechanism so that the transmission mechanism outputs a starting power to the engine with a low rotation speed and a high torque. The gear type speed reducing mechanism comprises an input gear which is mounted to an armature shaft of the electric motor via straight splines. The armature shaft is supported at its opposite ends by bearings. In general, there is an axial play for the armature shaft between the two bearings, and this play may be, for example, in the range of 0.3 mm to 1.7 mm. Due to the existence of this play, the armature shaft may present axial free displacement during operation. As a result, a commentator carried by the armature shaft and carbon brushes biased against the commentator are prone to be worn, which causes a shortening of the service life of the starter.

In order to cope with the problem caused by the axial play, a solution according to prior art comprises adding a shim between a shoulder of the armature shaft and one of the bearings. However, a shim with a suitable thickness have to be selected each time since the plays may have different sizes, which results in complexity in management and assembling of components as well as requirement on high assembling skill. Further, even if a shim is added, a small residue play is generally still left here, and thus the wear of the commentator and the carbon brushes cannot be avoided completely.

Another solution according to prior art comprises mounting a U-shaped washer and a shim at a shaft end. However, disequilibrium of movement will be caused since the weight center of the U-shaped washer is not on the central axis of the armature shaft. The U-shaped washer may even be offset or detached, which may result in damage of adjacent elements, such as a shaft end cap.

### Summary of the disclosure

The disclosure is aimed at solving the problem caused by the axial play of the armature shaft of the electric motor in the vehicle starter as found in the prior art.

For this end, according to one aspect of the disclosure, there provides an electric motor assembly, in particular an electric motor assembly of a vehicle starter, the electric motor assembly comprising t an electric motor and a speed changing mechanism, the electric motor comprising an armature shaft, and the speed changing mechanism comprising an input gear which is fitted onto the armature shaft by splines; wherein the splines comprise male spline keys formed on the armature shaft and female spline keys formed in the input gear for mating with the male spline keys, each spline key including a pair of key flanks, at least one of which is oblique with respect to a central axis of the armature shaft.

According to a possible embodiment of the disclosure, the pair of key flanks of each spline key are both oblique with respect to the central axis of the armature shaft.

According to a possible embodiment of the disclosure, the pair of key flanks of each spline key are oblique in substantially opposite directions with respect to the central axis of the armature shaft.

According to a possible embodiment of the disclosure, the pair of key flanks of each spline key are oblique at the same angle or at different angles with respect to the central axis of the armature shaft.

According to a possible embodiment of the disclosure, the armature shaft is rotatably supported by a bearing, the oblique directions of the pair of key flanks of each male spline key on the armature shaft being determined such that the width of the male spline key is decreased gradually in a direction away from the bearing.

According to a possible embodiment of the disclosure, the oblique angles of the key flanks of each spline key with respect to the central axis of the armature shaft are selected such that, during the rotation of the armature shaft, the input gear generates an axial force on the armature shaft by means of the splines, which force is large enough so that the armature shaft is biased against the bearing in an axial direction without leaving any play therebetween.

According to a possible embodiment of the disclosure, the oblique angle of each oblique key flank with respect to the central axis of the armature shaft is 3 degrees to 20 degrees, preferably 5 degrees to 18 degrees, and most preferably 5 degrees to 15 degrees.

According to a possible embodiment of the disclosure, the speed changing mechanism comprises a sun-planet gear type speed reducing mechanism, with the input gear acting as a sun gear of the sun-planet gear type speed reducing mechanism, the sun-planet gear type speed reducing mechanism further comprises one or more planet gears, an outer ring gear and a gear carrier, the one or more planet gears being carried by the gear carrier and meshed between the sun gear and the outer ring gear, and the sun-planet gear type speed reducing mechanism has an output end formed by the gear carrier.

According to a possible embodiment of the disclosure, the armature shaft is supported by bearings at its front and back ends respectively, the back bearing being mounted in a back cover of the electric motor, and the front bearing being mounted in a fixed support which is integral with the outer ring gear.

The disclosure in another aspect provides a vehicle starter which comprises an electric motor assembly as described above, for transmitting a driving force to an engine to start the engine.

According to the disclosure, an axial force created by splines with oblique key flanks is utilized for eliminating the axial play of the armature shaft, so that the wear of the commentator and the carbon brushes due to the axial displacement of the armature shaft can be avoided.

### Brief Description of the Drawings

Figure 1 is a partial sectional view of a vehicle starter according to the disclosure.
Figure 2 is a front view of an armature shaft and an input gear of an electric motor assembly in the vehicle starter shown in Figure 1.
Figure 3 is a side view of the armature shaft and the input gear shown in Figure 2.
Figures 4 and 5 are respective sectional and perspective views of the input gear shown in Figure 2.
Figures 6 and 7 are respective sectional and perspective views of the armature shaft shown in Figure 2.
Figure 8 is a schematic view showing the mating relation of splines of the input gear and the armature shaft.

### Detailed Description of Preferred Embodiments

Now some preferred embodiments of the disclosure will be described with reference to the drawings.

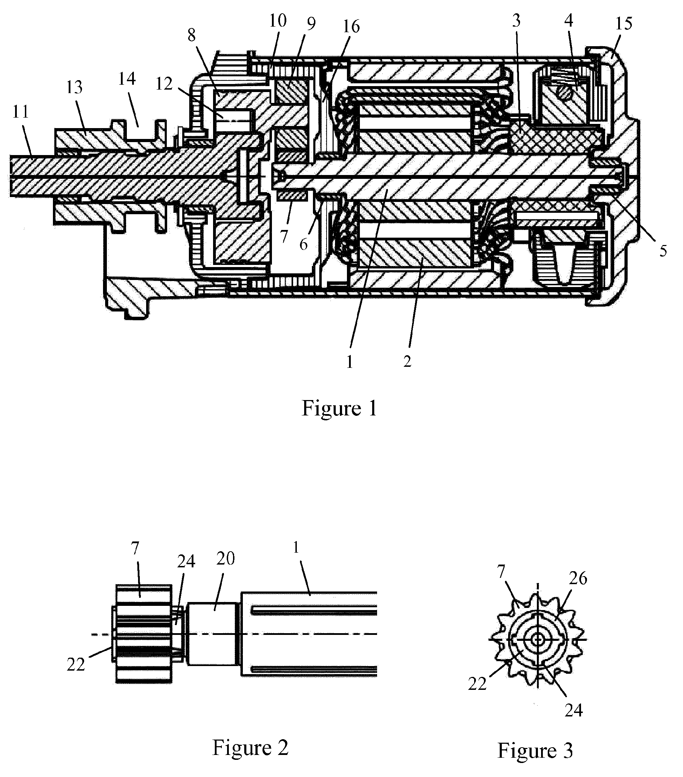

First, Figure 1 shows a portion of a vehicle starter according to the disclosure, the starter mainly comprising an electric motor assembly, a transmission mechanism and a solenoid switch, wherein major components of the electric motor assembly and the transmission mechanism are shown, while the solenoid switch is not shown here.

The electric motor assembly is composed main of two parts, an electric motor and a speed changing mechanism (here, a speed reducing mechanism). The electric motor mainly comprises an armature shaft 1, an armature winding 2 mounted around the armature shaft 1, a commentator 3 mounted on the armature shaft 1 for supplying electricity to the armature winding 2 in the same single current flow direction, and carbon brushes 4 biased against the outer periphery of the commentator 3 for supplying electricity.

The armature shaft 1 is supported at its opposite ends by bearings 5 and 6 respectively. Specifically, a back portion of the armature shaft 1 is supported by the bearing 5. A front portion of the armature shaft 1 is formed with a supported segment 20 extending forwards from a main portion of the armature shaft 1 and having a reduced diameter with respect to the main portion, and a gear mounting segment 22 extending forwards from the supported segment 20 and having a reduced diameter with respect to the supported segment 20, as can be seen from Figure 2, the supported segment 20 being supported by the bearing 6.

The speed changing mechanism according to the disclosure comprises a gear type speed changing mechanism, which is a sun-planet gear type speed reducing mechanism in the illustrated embodiment, the sun-planet gear type speed reducing mechanism comprising an input gear 7, which acts as a sun gear, mounted to the gear mounting segment 22 via splines, one or more planet gears 9 carried by a gear carrier 8, and a fixed outer ring gear 10. The planet gears 9 are meshed between the sun gear 7 and the outer ring gear 10. The sun-planet gear type speed reducing mechanism has an output end formed by the gear carrier 8.

It is appreciated that other gear type speed changing mechanisms may also be used in the disclosure. No matter which type of speed changing mechanism is used here, the mechanism has an input gear forming an input end, which is fitted to the armature shaft 1 (in particular, to the gear mounting segment 22) via splines.

The transmission mechanism mainly comprises a transmission shaft which is arranged coaxial with the armature shaft 1 and coupled with the gear carrier 8 via an overrun clutch 12, and a driving gear 13 slidably carried by the transmission shaft 11 for meshing with a mating gear on an engine flywheel to start the engine.

The driving gear 13 is formed integrally with an actuating portion 14 which is configured to be displaced by an actuating fork (not shown) for driving the driving gear 13 to slide forwards and backwards on the transmission shaft 11 so as to be meshed with and detached from the mating gear on the engine flywheel. The action of the actuating fork is controlled by the solenoid switch (not shown).

Returning back to Figure 1, the back bearing 5 is mounted to a back cover 15 of the electric motor, and the front bearing 6 is mounted in a support 16 which is integral with the outer ring gear 10 or mounted in a fixed support of other types. For the reasons of layout and assembling, the armature shaft 1 presents an axial play between the bearings 5 and 6, which play may result in axially free movement of the armature shaft 1 during the operation of the electric motor, and thus cause wear of the commentator 3 and the carbon brushes 4. For the carbon brushes 4, they are subjected to normal wear during the operation of the electric motor, so the wear will become worse if there is the above play, which may negatively affect the service life of the electric motor, and even of the entire starter.

In response to the problem created by the play, the disclosure provides improvement to the splines between the gear mounting segment 22 of the armature shaft 1 and the input gear 7 so that an axial force is generated to be applied onto the armature shaft 1 during the operation of the electric motor, by which axial force the display can be eliminated.

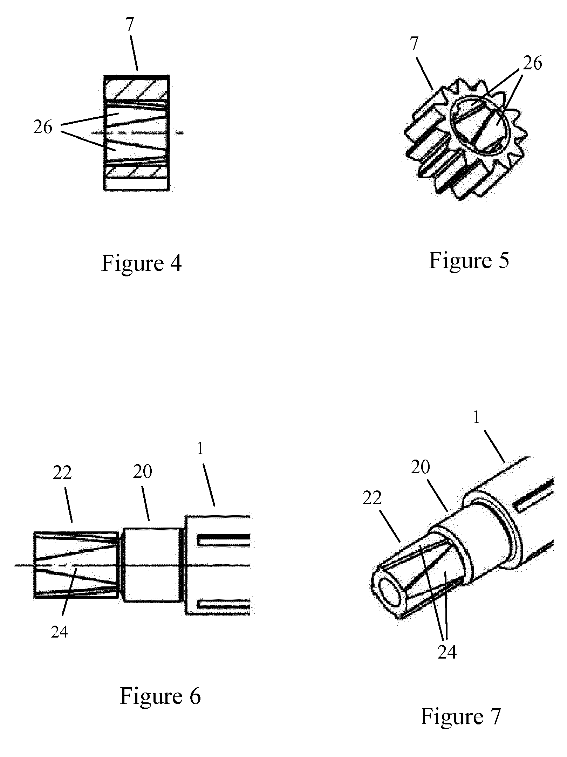

According to the disclosure, the splines between the gear mounting segment 22 and the input gear 7 comprise a plurality of spline keys 24 (i.e., male spline keys, as can be seen from Figures 2, 3, 6 and 7) formed on an outer periphery of the gear mounting segment 22 and a plurality of spline keys 26 (i.e., female spline keys, as can be seen from Figures 3, 4 and 5) formed on an inner periphery which defines an internal through hole in the input gear 7.

In the illustrated embodiment, the gear mounting segment 22 and the input gear 7 each comprise four spline keys. It is appreciated that suitable numbers of spline keys may be designed according to the sizes or other concrete conditions of the gear mounting segment 22 and the input gear 7, the spline keys being preferably equally distributed around the central axis of the armature shaft 1 (i.e., the central axis of the input gear 7). The spline keys on the gear mounting segment 22 (or the input gear 7) may have the same shape/dimension or different shapes/dimensions; in the later case, radially opposing spline keys are preferably configured to be rotationally symmetrical with each other with respect to the central axis.

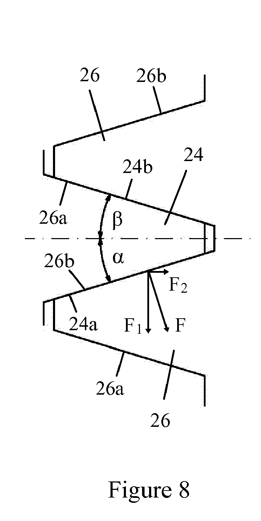

Each spline key comprises a tip surface and a pair of key flanks, the pair of key flanks being both oblique (or helical) with respect to the central axis of the armature shaft 1 or of the input gear 7, and the oblique directions of them being substantially opposite (away) from each other. Specifically, as shown in Figure 8, each spline key 24 comprises key flanks 24a and 24b, and each spline key 26 comprises key flanks 26a and 26b. Each spline key 24 is inserted and fitted in a key slot formed between two neighboring spline keys 26, and each spline key 26 is inserted and fitted in a key slot formed between two neighboring spline keys 24.

The oblique directions of the key flanks of each spline key 24 on the gear mounting segment 22 are set such that the width of the spline key 24 decreases gradually in a direction away from the main body of the armature shaft 1, while the width of the key slot between two spline key 24 is increased gradually in this direction. The oblique directions of the key flanks of each spline key 26 on the input gear 7 are set in a manner contrary to that of the spline key 24.

The spline key 24 is engaged with a corresponding spline key 26, and their key flanks that are in contact with each other have the same the oblique angle (or helical angle).

As shown in Figure 8, the key flanks 24a and 24b of each spline key 24 have oblique angles (helical angles) α and β respectively. The two angles may be equal to each other; however, they may be designed to be different from each other when the normal rotation direction of the electric motor and other factors are considered.

Correspondingly, the key flanks 26b and 26a of the spline key 26, which are in contact with the key flanks 24a and 24b respectively, have the same oblique angles (helical angles) α and β with the key flanks 24a and 24b.

By means of the spline keys which have oblique key flanks, the torque on the armature shaft 1 is transmitted to the input gear 7 via the splines when the armature shaft 1 drives the input gear 7 to rotate. The torque is transmitted in the form of forces. As shown in Figure 8, each spline key 24 on the gear mounting segment 22 applies by one of its key flanks (for example, the key flank 24a) a normal force F to a key flank (for example, the key flank 26b) of the corresponding spline key 26 (the spline key in contract with the spline key 24) on input gear 7, the normal force F having a circumferential component F₁ and an axial component F₂. The circumferential component F₁ generates a torque on the input gear 7, while the axial component F₂ causes the input gear 7 to generate a reacting force in the axial direction, the reacting force being equal to but in opposite direction from the axial component F₂ and being acted on the spline key 24. The resultant force resulted from the axial reacting forces on the spline keys 24 is a backward axial force acted onto the armature shaft 1. The magnitude of the axial force, which depends on the oblique angles, is designed to be able to force the armature shaft 1 to move backwards in the axial direction so that a shoulder formed on the back portion of the armature shaft 1 contacts and biases against the back bearing 5. In this way, the armature shaft 1 is kept to be biased against the bearing 5 during the operation of the electric motor, without any play that tends to allow free displacement of the armature shaft 1 to occur.

Since the pair of key flanks of each spline key are both oblique and the oblique directions of them are substantially opposite from each other, the armature shaft 1 is always subjected to a backward axial force from the input gear 7, no matter in which direction the electric motor rotates (forward rotation or backward rotation) to drive the input gear 7, and thus the play is always eliminated.

Further, after the vehicle engine is started by means of the rotation of the electric motor, the rotational speed of the engine increases quickly, so the rotational speed of the transmission shaft 11 becomes higher than the output rotational speed of the sun-planet gear type speed reducing mechanism. By providing the overrun clutch 12, the transmission shaft 11 cannot drive the sun-planet gear type speed reducing mechanism and thus drives the armature shaft 1. Even though, the transmission shaft 11 may also transmit a certain backward torque to the input gear 7 via the sun-planet gear type speed reducing mechanism, and the backward torque may be transmitted to the armature shaft 1 via the splines. Even if this condition appears, the axial force on the armature shaft 1 caused by the backward torque is still directed backwards due to the fact that the pair of key flanks of each spline key are oblique in substantially opposite directions as described above, and thus the state that the armature shaft 1 biases against the bearing 5 in the axial direction can be maintained to prevent the generation of any play.

It is appreciated that, in order to prevent the input gear 7 from detached from the armature shaft 1 under the axial reacting force from the armature shaft 1, a stop may be provided at the corresponding shaft end of the armature shaft 1 for keeping the input gear 7 to be fixed to the armature shaft 1.

Due to the axial force generated on the armature shaft 1 by the splines during the operation of the electric motor, the play on the armature shaft 1 is eliminated, and thus the commentator 3 and carbon brushes 4 can be protected from worn caused by the free displacement of the armature shaft 1, so the service life of the electric motor and the entire starter can be prolonged.

In addition, by providing each spline key with a pair of key flanks which are oblique in substantially opposite directions, a backward axial force is always generated on the armature shaft 1, no mater in which direction the electric motor rotates, and no mater whether the armature shaft 1 applies a torque to the input gear 7 or the input gear 7 applies a torque to the armature shaft 1. Thus, it can be guaranteed that the armature shaft does not present any play in all the conditions that the electric motor may meet and in all the switching stages between various conditions.

It is appreciated that, the axial force on the armature shaft 1 is in direct proportion to the tangent value of the oblique angle (α or β) of the active key flank. In other words, a bigger oblique angle results in a bigger axial force. However, an excessive axial force may have negative effects, for example, damage of the bearing 5 or so. On the other hand, the oblique angle shall be larger than the self-locking angle between the materials (for example, steel, generally under lubrication) of the engaged spline keys, so that the engaging spline keys can slide in the axial direction with respect to each other.

Considering all these factors, the oblique angle (α or β) may be set to be 3 degrees to 20 degrees, preferably 5 degrees to 18 degrees, and most preferably 5 degrees to 15 degrees.

It is noted that, although the pair of key flanks of each spline key are both oblique in the embodiments described above and the oblique directions of them are substantially opposite from each other, it is not necessary that the pair of key flanks are always set in this manner since the operation state of the electric motor may be relatively simple in some conditions. For example, one of the pair of key flanks may be oblique, while the other one may be straight (i.e., parallel to the central axis of the armature shaft or of the input gear). Alternatively, the pair of key flanks may both be oblique, but have substantially the same oblique direction; in this condition, the oblique angles of the two key flanks may be the same (forming a helical spline), or be different from each other. The scope of the disclosure covers all these conditions.

Further, the electric motor assembly of the disclosure is applicable in a vehicle starter; however, it is appreciated that the electric motor assembly the disclosure can also be used in other fields in which the play of the armature shaft needs to be eliminated.

Although the disclosure has been described with reference to particular embodiments, the scope of the disclosure is not limited to the illustrated and described details, and various modifications to these details may be made without departing from the spirit of the disclosure.

## Claims

1. An electric motor assembly, in particular an electric motor assembly of a vehicle starter, comprising an electric motor and a speed changing mechanism, the electric motor comprising an armature shaft, and the speed changing mechanism comprising an input gear which is fitted onto the armature shaft by splines;
wherein the splines comprise male spline keys formed on the armature shaft and female spline keys formed in the input gear for mating with the male spline keys, each spline key including a pair of key flanks, at least one of which is oblique with respect to a central axis of the armature shaft.

2. The electric motor assembly of claim 1, wherein the pair of key flanks of each spline key are both oblique with respect to the central axis of the armature shaft.

3. The electric motor assembly of claim 2, wherein the pair of key flanks of each spline key are oblique in substantially opposite directions with respect to the central axis of the armature shaft.

4. The electric motor assembly of claim 2 or 3, wherein the pair of key flanks of each spline key are oblique at the same angle or at different angles with respect to the central axis of the armature shaft.

5. The electric motor assembly of any one of claims 2 to 4, wherein the armature shaft is rotatably supported by a bearing, the oblique directions of the pair of key flanks of each male spline key on the armature shaft being determined such that the width of the male spline key is decreased gradually in a direction away from the bearing.

6. The electric motor assembly of claim 5, wherein the oblique angles of the key flanks of each spline key with respect to the central axis of the armature shaft are selected such that, during the rotation of the armature shaft, the input gear generates an axial force on the armature shaft by means of the splines, which force is large enough so that the armature shaft is biased against the bearing in an axial direction without leaving any play therebetween.

7. The electric motor assembly of any one of claims 1 to 6, wherein the oblique angle of each oblique key flank with respect to the central axis of the armature shaft is 3 degrees to 20 degrees, preferably 5 degrees to 18 degrees, and most preferably 5 degrees to 15 degrees.

8. The electric motor assembly of any one of claims 1 to 7, wherein the speed changing mechanism comprises a sun-planet gear type speed reducing mechanism, with the input gear acting as a sun gear of the sun-planet gear type speed reducing mechanism, the sun-planet gear type speed reducing mechanism further comprises one or more planet gears, an outer ring gear and a gear carrier, the one or more planet gears being carried by the gear carrier and meshed between the sun gear and the outer ring gear, and the sun-planet gear type speed reducing mechanism has an output end formed by the gear carrier.

9. The electric motor assembly of claim 8, wherein the armature shaft is supported by bearings at its front and back ends respectively, the back bearing being mounted in a back cover of the electric motor, and the front bearing being mounted in a fixed support which is integral with the outer ring gear.

10. A vehicle starter comprising an electric motor assembly according to any one of claims 1 to 9 for transmitting a driving force to an engine to start the engine.
